# DEMANDE DE BREVET EUROPEEN

(11) **EP 1 936 255 A1**
(43) Date de publication de la demande: **25.06.2008**
(21) Numéro de dépôt: 07301592.7
(22) Date de dépôt: 27.11.2007
(51) Int. Cl.: F17C 13/02, F17C 13/04

(54) **Robinet pour réservoir de gaz sous pression et réservoir comportant un tel robinet**

(30) Priorité: 21.12.2006 FR 0655771
(71) Demandeur: L'AIR LIQUIDE, Société Anonyme pour l'Etude et l'Exploitation des Procédés Georges Claude, 75007 Paris (FR)
(72) Inventeur: Moretti, Alessandro, 25127 Brescia (IT)
(74) Mandataire: De Cuenca, Emmanuel Jaime

(57) **Abrégé**

Robinet pour réservoir de gaz sous pression comprenant un corps (10) abritant un circuit interne de gaz s'étendant entre une première extrémité (1) destinée à communiquer avec un réservoir et une seconde (13) extrémité destinée à être raccordée à un circuit utilisateur, un clapet de pression (2) résiduelle et un dispositif de mesure de pression (4) caractérisé en ce que le dispositif de mesure de pression (4) est monté dans le corps (10) du robinet au sein d'un puits de raccordement communiquant avec le circuit interne et débouchant à l'extérieur du corps (1) via une unique ouverture et en ce que le clapet de pression (2) résiduelle est logé dans le fonds du puits de raccordement et monté dans ce dernier via l'unique ouverture du puits de raccordement du dispositif de mesure de pression (4), le clapet de pression (2) résiduelle et le dispositif de mesure de pression (4) étant disposés en série dans un même conduit (1) du circuit, le clapet de pression (2) résiduelle étant disposé physiquement en amont du dispositif de mesure de pression (4) dans le puits de raccordement selon un trajet depuis la première extrémité (1) vers la seconde (13) extrémité et en ce qu'il comporte un conduit de dérivation (6, 7, 17) reliant la chambre de mesure de pression du dispositif de mesure de pression (4) à une portion de circuit (1) située en amont du clapet de pression (2) résiduelle, de façon à bi-passer le clapet de pression (2) pour mesurer la pression en amont de ce dernier.

## Description

La présente invention concerne un robinet pour réservoir de gaz sous pression et un réservoir comportant un tel robinet.

L'invention concerne plus particulièrement un robinet pour réservoir de gaz sous pression comprenant un corps abritant un circuit interne de gaz s'étendant entre une première extrémité destinée à communiquer avec le réservoir de gaz sous pression et une seconde extrémité destinée à être raccordée à un circuit utilisateur, un clapet de pression résiduelle et un dispositif de mesure de pression.

Un clapet de pression résiduelle est destiné à former une retenue de pression positive dans un réservoir pour interdire la vidange complète de ce dernier. De cette façon, un clapet de pression résiduelle introduit une barrière entre l'intérieur et l'extérieur du réservoir pour éviter que l'intérieur ne soit pollué.

Un tel clapet de pression résiduelle peut être franchi par le gaz au prix d'une perte de charge déterminée. Ainsi, au-dessous d'une pression seuil, le gaz ne s'échappera pas du réservoir. C'est-à-dire que le clapet est dimensionné pour ne s'ouvrir que dans le sens de la sortie de gaz et lorsque le différentiel de pression de part et d'autre du clapet atteint un niveau déterminé.

Pour connaître la quantité de gaz à l'intérieur d'un réservoir un moyen simple consiste à mesurer la pression du gaz dans le réservoir avant un éventuel détendeur de pression.

Les mesures mécaniques de pression en aval d'un clapet de pression résiduel sont généralement faussées par le comportement du clapet. Les mesures de pression mécaniques peuvent s'accommoder de cette erreur et les manomètres correspondants peuvent être adaptés en conséquence. Cependant, la demanderesse a constaté que ces erreurs de mesure de pression sont encore plus sensibles lorsque le dispositif de mesure de pression est du type à fonctionnement électronique et que l'information mesurée est ensuite traitée numériquement par une logique électronique. Ces erreurs peuvent ainsi perturber les systèmes exploitant cette mesure.

Une solution connue pour résoudre ce problème consiste à connecter le dispositif de mesure de pression dans le corps du robinet dans un canal indépendant de celui comprenant le clapet de pression résiduel. Le document GB 1319764 décrit un robinet selon le préambule de la revendication principale dans lequel le dispositif de mesure de pression et le clapet de pression résiduelle sont montés dans le corps via des puits de raccordement respectifs distincts (c'est à dire débouchant chacun avec l'extérieur du robinet via une ouverture propre de montage). Ceci augmente cependant la complexité du robinet et donc son coût. Par ailleurs, ces solutions nécessitent des architectures différentes et des adaptations pour un même robinet suivant qu'il nécessite ou non un clapet de pression résiduel.

Un but de la présente invention est de pallier tout ou partie des inconvénients de l'art antérieur relevés ci-dessus.

A cette fin, le selon l'invention, par ailleurs conforme à la définition générique qu'en donne le préambule ci-dessus, est essentiellement caractérisé en ce que le clapet de pression résiduelle et le dispositif de mesure de pression sont disposés en série dans un même conduit du circuit, le clapet de pression résiduelle étant disposé en amont du dispositif de mesure de pression selon un trajet depuis la première extrémité vers la seconde extrémité et en ce qu'il comporte un conduit de dérivation reliant le dispositif de mesure de pression à une portion de circuit située en amont du clapet de pression résiduelle, de façon à bi-passer le clapet de pression pour mesurer la pression en amont de ce dernier.

L'invention s'applique ainsi aussi bien au cas d'un robinet pourvu d'un dispositif de mesure de pression de type mécanique (manomètre mécanique) qu'à un robinet avec un dispositif de mesure de pression de type électronique (capteur électronique de pression générant un signal de type électronique).

Par ailleurs, des modes de réalisation de l'invention peuvent comporter l'une ou plusieurs des caractéristiques suivantes :
- le dispositif de mesure de pression est monté dans le corps du robinet au sein d'un puits de raccordement communiquant avec le circuit interne et débouchant à l'extérieur du corps et en ce que le clapet de pression résiduelle est logé dans ledit puits de raccordement,
- le clapet de pression résiduelle est maintenu en position dans le corps au moins en partie par le dispositif de mesure de pression,
- le conduit de dérivation comprend au moins une portion formée dans le corps du robinet,
- le conduit de dérivation comprend au moins une portion formée dans le corps du clapet de pression résiduelle,
- le clapet de pression résiduelle est logé dans un boîtier,
- le conduit de dérivation comprend au moins une portion formée dans le boîtier du clapet de pression résiduelle,
- le conduit de dérivation comprend au moins une portion coaxiale au conduit comprenant le clapet de pression résiduelle et le dispositif de mesure de pression,
- le clapet de pression résiduelle comprend un organe mobile destiné à coopérer en ouverture/fermeture avec un siège et en ce que le conduit de dérivation comprend un canal formé au travers de l'organe mobile,
- le robinet comporte un clapet d'isolement dans le circuit situé en aval du clapet de pression résiduelle et du dispositif de mesure de pression,
- le robinet comporte un dispositif de détente de pression situé en aval ou en amont du clapet d'isolement,
- le dispositif de mesure de pression est un manomètre mécanique ou un manomètre électronique à capteur électronique de pression.

D'autres particularités et avantages apparaîtront à la lecture de la description ci-après, faite en référence aux figures dans lesquelles :
- la figure 1 représente une vue en coupe simplifiée et partielle d'un robinet pour réservoir de gaz sous pression selon premier mode de réalisation de l'invention,
- les figures 2 à 4 représentent des vues analogues à celle de la figure 1 représentant respectivement trois autres modes de réalisation de l'invention,
- la figure 5 représente encore un exemple de robinet simplifié illustrant schématiquement le principe général de l'invention

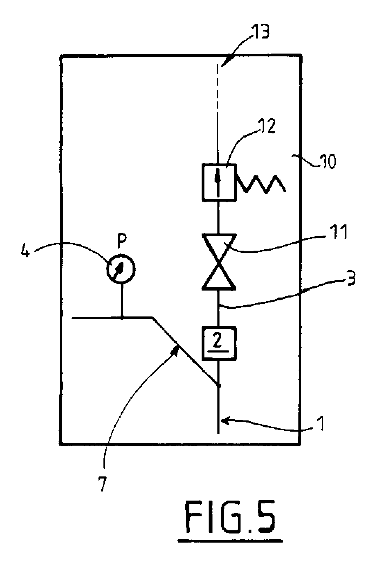

En se référant à la figure 5, le robinet comprend un corps 10 abritant un circuit interne de gaz s'étendant entre une première extrémité 1 destinées à communiquer avec un réservoir de gaz sous pression ou équivalent et une seconde 13 extrémité destinée à être raccordée à un circuit utilisateur ou équivalent. D'amont en aval, c'est-à-dire de la première extrémité 1 (réservoir) vers la seconde extrémité (utilisateur), le circuit comprend en série un clapet de pression 2 résiduelle, un dispositif de mesure de pression 4. Puis, en aval, le circuit peut comprendre un clapet 11 d'isolement actionnable par un volant ou un levier par exemple et un dispositif de détente de pression 12. Bien entendu, le robinet peut avoir tout autre agencement et des organes supplémentaires ou une structure simplifiée (par exemple sans détendeur 12 intégré).

Selon une particularité avantageuse, le clapet de pression 2 résiduelle et le dispositif de mesure de pression 4 sont disposés en série dans un même conduit ou canal du circuit. De plus, le robinet comporte un conduit de dérivation 7 reliant le dispositif de mesure de pression 4 à une portion de circuit 1 située en amont du clapet de pression 2 résiduelle, de façon à bi-passer le clapet de pression 2 pour mesurer la pression en amont de ce dernier.

Selon l'invention, la mesure de pression lue par le capteur de pression 4 est plus fiable et notamment moins perturbée dans le cas d'une mesure électronique.

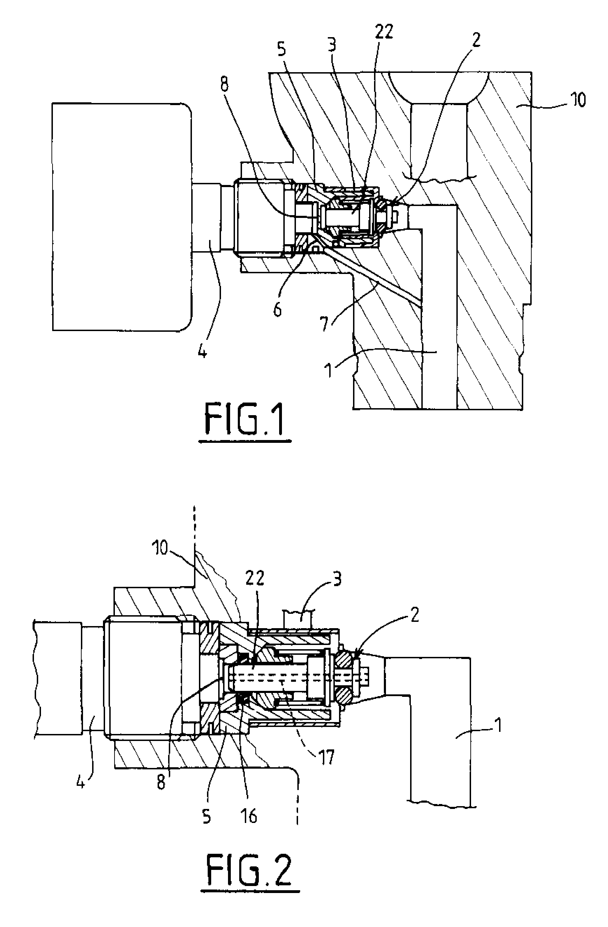

En se référant aux figures 1 et 5, le dispositif de mesure de pression 4 (manomètre) est monté dans le corps 10 du robinet au sein d'un puits de raccordement communiquant avec le circuit interne et débouchant à l'extérieur du corps 10 du robinet. Le clapet de pression 2 résiduelle est logé dans le puits de raccordement et peut être maintenu en position contre une butée au fond de ce puits par le dispositif de mesure de pression 4 lui-même. Le clapet de pression résiduel 2 est en communication fluidique en amont avec la première extrémité 1 du circuit (côté réservoir). L'aval du clapet de pression résiduel 2 communique fluidiquement avec un conduit 3 aval qui se poursuit jusqu'à une sortie non représentée à la figure 1 (via éventuellement d'autres organes de contrôle non représentés tel qu'au moins un détendeur, un filtre...).

La chambre de mesure 8 du dispositif de mesure de pression 4 (c'est-à-dire le volume dans lequel débouche la partie formant capteur de pression) est séparée de la haute pression (côté réservoir) par le corps du clapet de 2 de pression résiduel.

Classiquement, le clapet de pression 2 résiduelle peut comprendre un mécanisme à organe 22 mobile destiné à coopérer en ouverture/fermeture avec un siège.

Selon le mode de réalisation de la figure 1, une dérivation comprenant un canal 6 formé dans le corps du clapet de pression résiduel 2 et un canal 7 dans le corps 10 du robinet met en communication fluidique la chambre de mesure 8 du dispositif de mesure de pression 4 avec une portion de circuit 1 située en amont du clapet de pression 2 résiduelle. De cette façon, la dérivation bi-passe le clapet de pression 2. Le dispositif de mesure de pression 4 mesure ainsi la pression directement en amont dudit clapet 2.

Les figures 2 à 4 représentent des variantes de réalisation dans lesquelles, par soucis de concision, les éléments identiques à ceux décrits ci-dessus sont désignés par les même références numériques et ne sont pas décrits une seconde fois.

La variante de la figure 2 se distingue de celle de la figure 1 uniquement en ce que le conduit de dérivation comprend un canal 17 formé au travers de l'organe 22 mobile du clapet 2. Par ailleurs l'étanchéité entre le corps du clapet 2 et l'organe 22 mobile est assurée par un système de joint 16 fixe du type annulaire monté dans un logement du corps du clapet 2.

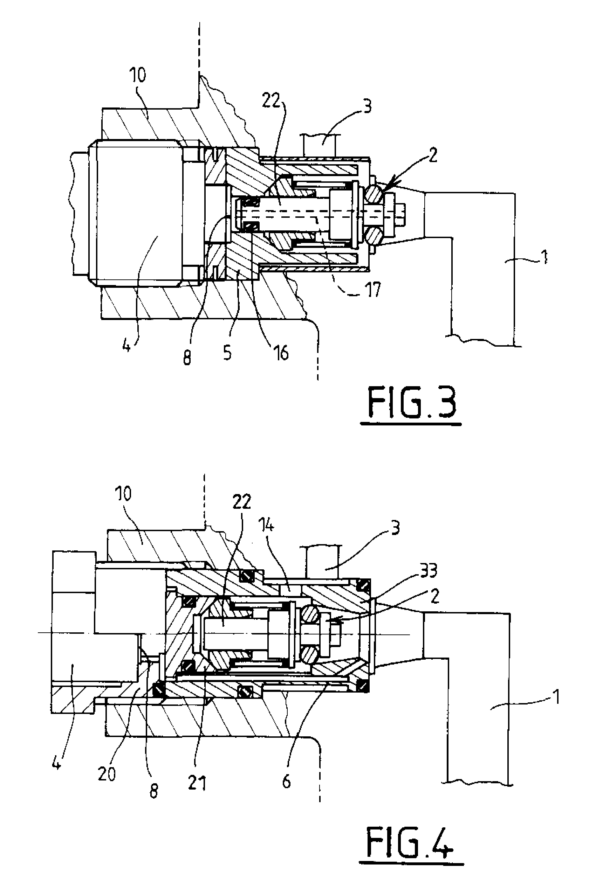

La variante de la figure 3 se distingue de celle de la figure 2 uniquement en ce que l'étanchéité entre le corps du clapet 2 et l'organe 22 mobile est assurée par un système de joint 16 mobile du type annulaire monté dans un logement de l'organe mobile 22.

La variante de la figure 4 se distingue de celle de la figure 1 en ce que le clapet de pression 2 résiduelle est logé dans un boîtier 33 ou une cartouche de montage et en ce que le conduit de dérivation est formé au travers du boîtier 33. Par ailleurs, le boîtier 33 comporte un orifice 14 assurant la communication entre l'aval du clapet 2 et le conduit 3 aval. L'étanchéité entre l'amont et l'aval du clapet 2 est assurée par l'organe mobile 22 et le siège et également par le boîtier 33, un système de joints interposés entre le boîtier 33 et le corps du robinet 10 et un bouchon 21 situé dans la partie arrière du boîtier 33 (du côté de la chambre de mesure 8).

Par ailleurs un adaptateur 20 peut être interposé dans le puits entre le dispositif de mesure de pression 4 et le clapet de pression 2 résiduelle (ce qui peut être le cas également des variantes précédentes).

De préférence le clapet de pression résiduelle est maintenu contre le fond du puits (canal) de raccordement du manomètre par le manomètre qui agit directement sur le clapet ou via une pièce intermédiaire (adaptateur par exemple).

On conçoit donc aisément que tout en étant de structure simple, l'invention permet de conférer au robinet une grande compacité tout en réduisant les risques de fuite et en minimisant les opérations d'usinage du robinet.

En particulier, les modes de réalisation des figures 2 à 4 peuvent être appliquées sur des robinets préexistant sans nécessiter d'usinage supplémentaire.

## Revendications

1. Robinet pour réservoir de gaz sous pression comprenant un corps (10) abritant un circuit interne de gaz s'étendant entre une première extrémité (1) destinée à communiquer avec un réservoir et une seconde (13) extrémité destinée à être raccordée à un circuit utilisateur, un clapet de pression (2) résiduelle et un dispositif de mesure de pression (4) **caractérisé en ce que** le dispositif de mesure de pression (4) est monté dans le corps (10) du robinet au sein d'un puits de raccordement communiquant avec le circuit interne et débouchant à l'extérieur du corps (1) via une unique ouverture et **en ce que** le clapet de pression (2) résiduelle est logé dans le fonds du puits de raccordement et monté dans ce dernier via l'unique ouverture du puits de raccordement du dispositif de mesure de pression (4), le clapet de pression (2) résiduelle et le dispositif de mesure de pression (4) étant disposés en série dans un même conduit (1) du circuit, le clapet de pression (2) résiduelle étant disposé physiquement en amont du dispositif de mesure de pression (4) dans le puits de raccordement selon un trajet depuis la première extrémité (1) vers la seconde (13) extrémité et **en ce qu'**il comporte un conduit de dérivation (6, 7, 17) reliant la chambre de mesure de pression du dispositif de mesure de pression (4) à une portion de circuit (1) située en amont du clapet de pression (2) résiduelle, de façon à bi-passer le clapet de pression (2) pour mesurer la pression en amont de ce dernier.

2. Robinet selon l'une quelconque des revendications précédentes, **caractérisé en ce que** le clapet de pression (2) résiduelle est maintenu en position dans le corps (1) au moins en partie par le dispositif de mesure de pression (4).

3. Robinet selon l'une quelconque des revendications précédentes, **caractérisé en ce que** le conduit de dérivation (6, 7, 17) comprend au moins une portion (7) formée dans le corps (1) du robinet.

4. Robinet selon l'une quelconque des revendications précédentes, **caractérisé en ce que** le conduit de dérivation (6, 7, 17) comprend au moins une portion (6) formée dans le corps (5) du clapet de pression (2) résiduelle.

5. Robinet selon l'une quelconque des revendications précédentes, **caractérisé en ce que** le clapet de pression (2) résiduelle est logé dans un boîtier (33).

6. Robinet selon la revendication 5, **caractérisé en ce que** le conduit de dérivation (6, 7, 17) comprend au moins une portion (6) formée dans le boîtier (33) du clapet de pression (2) résiduelle.

7. Robinet selon l'une quelconque des revendications précédentes, **caractérisé en ce que** le conduit de dérivation (6, 7, 17) comprend au moins une portion coaxiale au conduit (1) comprenant le clapet de pression (2) résiduelle et le dispositif de mesure de pression (4).

8. Robinet selon l'une quelconque des revendications précédentes, **caractérisé en ce que** le clapet de pression (2) résiduelle comprend un organe (22) mobile destiné à coopérer en ouverture/fermeture avec un siège et **en ce que** le conduit de dérivation (6, 7, 17) comprend un canal (17) formé au travers de l'organe (22) mobile.

9. Robinet selon l'une quelconque des revendications précédentes, **caractérisé en ce qu'**il comporte un clapet (11) d'isolement dans le circuit situé en aval du clapet de pression (2) résiduelle et du dispositif de mesure de pression (4).

10. Robinet selon la revendication 9, **caractérisé en ce qu'**il comporte un dispositif de détente de pression (12) situé en aval ou en amont du clapet (11) d'isolement.

11. Robinet selon l'une quelconque des revendications précédentes, **caractérisé en ce que** le dispositif de mesure de pression (4) est un manomètre mécanique ou un manomètre électronique à capteur électronique de pression.

12. Réservoir de gaz sous pression **caractérisé en ce qu'**il comprend un robinet selon l'une quelconque des revendications précédentes.
